# EUROPÄISCHE PATENTSCHRIFT

(11) **EP 2 439 487 B1**
(45) Veröffentlichungstag und Bekanntmachung des Hinweises auf die Patenterteilung: **22.08.2012**
(21) Anmeldenummer: 10186638.2
(22) Anmeldetag: 06.10.2010
(51) Int. Cl.: G01B 11/00, G01B 11/245, G06T 7/00

(54) **Volumenmessvorrichtung für bewegte Objekte**
Volume measuring device for mobile objects
Dispositif de mesure de volume pour objets mobiles

(43) Veröffentlichungstag der Anmeldung: 11.04.2012
(73) Patentinhaber: SICK AG, 79183 Waldkirch (DE)
(72) Erfinder: MacNamara, Shane, 79285 Ebringen (DE); Hammes, Markus, 79104 Freiburg (DE); Schmitz, Stephan, 79108 Freiburg (DE); Johansson, Bjorn, 58332 Linköping (SE)
(74) Vertreter: Hehl, Ulrich

(56) Entgegenhaltungen:
- EP-A1- 0 851 209
- DE-A1-102006 056 556
- US-A- 6 115 114

## Beschreibung

Die Erfindung betrifft eine Volumenmessvorrichtung für bewegte Objekte sowie ein Verfahren zur Volumenmessung bewegter Objekte nach dem Oberbegriff von Anspruch 1 beziehungsweise 13.

Der Warentransport eines Logistikunternehmens lässt sich in vier Schritte gliedern: Anliefern an ein Lager beziehungsweise Verteilerzentrum, Datenerfassung der Waren, Lagerung und Auslieferung. Die vorliegende Erfindung befasst sich mit der Volumenerfassung als Teil des zweiten Schritts, der Datenerfassung, die zur Beschleunigung und Kostenersparnis so weit wie möglich automatisiert wird. Dabei ist zwischen der Abfertigung von Paketen und von Paletten zu unterscheiden.

Die Abfertigung von Paketen läuft bereits weitgehend automatisch ab. Das Scannen, Vermessen und Wiegen der Pakete ist hochgradig in den Transport auf Förderbändern integriert und geschieht automatisch nach der Anlieferung an ein Lager. Die derart erfassten Informationen werden mit Hilfe von Barcodes, 2D-Codes oder RFID-Tags zugänglich gemacht. Manuelle Eingriffe sind nur im Fehlerfall erforderlich, beispielsweise bei einer unlesbaren Codierung.

Dieser Automatisierungsgrad lässt sich bisher bei Paletten nicht erreichen. Die Dimensionierung wird hier noch vom Kunden vorgenommen. Die entsprechenden Ungenauigkeiten können beim Logistikunternehmen zu Gewinneinbußen führen. Deshalb besteht der Wunsch, genaue Kenntnis über die Frachtdaten zu gewinnen. Die Dimensionierung, vor allem die mehrdimensionalen Messung zur Volumen bestimmung einer Palette erfordert hohen manuellen Aufwand, so dass diese Messung nur stichprobenartig vollzogen wird und selbst für die Stichprobe noch fehleranfällig bleibt.

Die Beförderung von Paletten innerhalb des Lagerhauses erfolgt mit geeigneten Fahrzeugen wie Gabelstaplern. Anders als bei Paketen auf einem Förderband gibt es keine technische Lösung, die Volumenmessung einer Palette auf einem Gabelstapler in den Transport zu integrieren ("on-the-fly"-Messung). Stattdessen muss der Transportfluss unterbrochen werden, um die Paletten an der Messstation abzuladen. Bekannte Systeme drehen dann die Palette gegenüber den Messsystemen, oder die Messsensoren werden während der Messung synchron über die Palette bewegt.

Die Notwendigkeit, den Transportfluss mit der Entladung an der Messstation zu unterbrechen, führt zu erheblichen Verzögerungen, die allenfalls für Stichproben in Kauf genommen werden. Deshalb ist es nicht möglich, die Volumenmessung in den Standardprozess zu integrieren.

Eine Palettenvolumenmessung während der Fahrit ist aus US-A-6115114 bekannt.

Es ist daher Aufgabe der Erfindung, die Volumenmessung an geförderten Objekten zu verbessern.

Diese Aufgabe wird durch eine Volumenmessvorrichtung gemäß Anspruch 1 und ein Verfahren zur Volumenmessung gemäß Anspruch 12 gelöst. Dabei geht die Erfindung von dem Grundgedanken aus, ein Objekt, insbesondere die Ladung eines Beförderungsmittels, während der Bewegung zu vermessen. Dazu wird mit einem Konturerfassungssensor jeweils die Teilkontur desjenigen Abschnitts erfasst, der sich aufgrund der Bewegung in dessen Erfassungsbereich befindet. Meist handelt es sich bei dem Abschnitt um ein 2D-Stück, d.h. eine Zeile beziehungsweise eine Scheibe des zu vermessenden Objekts. Sukzessive wird im Verlauf der Bewegung jeder Objektabschnitt als eine Teilkontur erfasst, aus denen durch sandwichartiges Zusammensetzen eine Gesamtkontur des Objekts gebildet wird.

Im Gegensatz zur herkömmlichen Verarbeitung von Paketen auf einem Förderband sind erfindungsgemäß beliebige Beförderungsmittel zugelassen, also in erster Linie Fahrzeuge wie Flurförderfahrzeuge oder Gabelstapler, prinzipiell aber auch andere wie Schubkarren oder Personen. Dadurch ist aber die Bewegung des Objekts nicht determiniert, und das Zusammensetzen der Scheiben kann nicht einfach anhand bekannter Förderprofile des Förderbands erfolgen. Deshalb ist erfindungsgemäß ein Odometriesensor vorgesehen, welcher anhand eines dreidimensionalen Bildes des Objekts die tatsächliche Objektbewegung erfasst, um diese Bewegung beim Zusammensetzen der Teilkonturen zu einer Gesamtkontur zu berücksichtigen.

Die Erfindung hat den Vorteil, dass sämtliche für die Datenerfassung erforderlichen Schritte dynamisch während der Bewegung des Beförderungsmittels erfolgen. Störende Unterbrechungen der standardisierten Abläufe in dem Lagerhaus, wie sie herkömmlich durch das Entladen an der Messstation erforderlich sind, werden dabei strikt vermieden. Während der Messung kann es zwar vorteilhaft sein, die Bewegungsgeschwindigkeit zu verringern. Dabei muss keine streng vorgeschriebene und keine gerade Bewegungsbahn eingehalten werden, es sind Geschwindigkeitsänderungen möglich, und die Ladung darf sich verschieben oder verdrehen. Auf diese Weise erhöht sich der Durchsatz, die Logistikkette wird nicht unterbrochen, und das Vermessen jeglicher Ladungen wird in die Standardprozesse integriert.

Der Odometriesensor ist bevorzugt mit der Konturerfassung synchronisiert, beispielsweise indem der Odometriesensor alle Sensoren triggert. Es wird somit jeweils ein 3D-Bild und damit ein Teilabschnitt der Objektbewegung mit der hieraus abgeleiteten Translation/Rotation je aufgenommener Teilkontur erfasst. Abweichend ist denkbar, die Bewegung in einem anderem Zeitraster zu ermitteln und beispielsweise die Objektbewegung zu interpolieren. Auflösung und Perspektive des Odometriesensors verhindern in der Praxis, dessen 3D-Bilder unmittelbar als Gesamtkontur zu verwenden. Prinzipiell denkbar ist, mehrere derartige Sensoren einzusetzen, um das Objekt von allen Seiten zu erfassen. Dann erfüllt der Odometriesensor zugleich die Aufgaben des Konturerfassungssensors.

Der Odometriesensor weist bevorzugt eine Merkmalserkennungseinheit auf, mit der robuste visuelle Merkmale identifizierbar sind, insbesondere Ecken oder Kanten, wobei die Bewegung des Objekts in der Bewegungsbestimmungseinheit anhand der dreidimensionale Lage der visuellen Merkmale bestimmbar ist. Damit wird die Bewegungserkennung auf wenige, zuverlässige Datenpunkte reduziert. Visuelle Merkmale müssen nicht notwendig in dem dreidimensionalen Bild bestimmt werden. Ist beispielsweise der Odometriesensor als Stereokamera ausgebildet, so können Merkmale auch beispielsweise nur in dem linken oder rechten Bild gefunden werden. Bei Ausbildung als Lichtlaufzeitkamera kann anstelle der Entfernungskarte auch ein mit demselben Bildsensor aufgenommenes 2D-Bild der Merkmalserkennung zugrunde gelegt werden. In zweidimensionalen Bilddaten kann aber nur die Identifizierung der Merkmale erfolgen, gegebenenfalls auch zusätzlich und unterstützend zu dem Auffinden von Merkmalen in den dreidimensionalen Bildern. Für die Bewegungsbestimmung sind dann aber auch zu den in zweidimensionalen Bildern aufgefundenen Merkmalen die dreidimensionalen Positionsdaten erforderlich.

Die Bewegungsbestimmungseinheit ist bevorzugt dafür ausgebildet, die Bewegung des Objekts inkrementell aus derjenigen Translation und/oder Rotation zu bestimmen, mit der die visuellen Merkmale aus zu verschiedenen Zeitpunkten aufgenommenen dreidimensionalen Bildern bestmöglich ineinander überführt werden. In der Regel wird dazu das dreidimensionale Bild des aktuellen und vorigen Frames verwendet, aber auch größere zeitliche Sprünge und die Einbeziehung weiterer Bilder sind denkbar. Die optimale inkrementelle Bewegungsbeschreibung, also Translation und/oder Rotation ist diejenige, die möglichst viele der visuellen Merkmale von einem früheren Frame in den aktuellen Frame überführt. Dazu werden Korrelations- und Minimierungsverfahren eingesetzt. Die Bewegungsbestimmungseinheit setzt dabei in einem gut handhabbaren Modell voraus, dass das Objekt einen starren Körper bildet, bei dem die Abstände zwischen je zwei Objektpunkten stets konstant bleiben. Möglich sind demnach zwar Bewegungen oder Drehungen des Objekts als Ganzes gegenüber dem Beförderungsmittel, nicht aber beispielsweise Schwingungen oder Scherungen des Objekts in sich. Alternativ zu einem starren Körper können auch kompliziertere Modelle derartige In-sich-Bewegungen des Objekts berücksichtigen.

Die Bewegungsbestimmungseinheit ist bevorzugt dafür ausgebildet, die Übereinstimmung visueller Merkmale über mehr als zwei dreidimensionale Bilder auszuwerten. Denn die inkrementelle Bestimmung der Objektbewegung führt zu aufakkumulierten Fehlern. Durch Berücksichtigen eines längeren Zeithorizontes, sei es von Anfang an oder durch nachträgliche Optimierung, werden diese Fehler reduziert. Dazu wird insbesondere eine Objekt- beziehungsweise Merkmalsverfolgung über mehrer Frames oder ein Bündelblockausgleich (bundle adjustment, bevorzugt sparse bundle adjustment) eingesetzt.

Bevorzugt ist eine Segmentierungseinheit vorgesehen, die dafür ausgebildet ist, eine Gesamtkontur nur des Objekts getrennt von dem Beförderungsmittel zu erzeugen. Dadurch wird nur das Volumen der Ladung und nicht des Beförderungsmittels selbst bestimmt. Zu diesem Zweck sind besonders bevorzugt Eigenschaften des Beförderungsmittels in der Segmentierungseinheit gespeichert. Solche Eigenschaften können beispielsweise anfänglich eingelernt werden, etwa durch eine Leerfahrt, per Eingabe ausgewählt beziehungsweise konfiguriert oder aus einer Markierung wie einem RFID-Tag gelesen werden.

Die Segmentierungseinheit ist bevorzugt dafür ausgebildet, eine zweidimensionale Projektion der Gesamtkontur zu erzeugen und mit Referenzdaten des Beförderungsmittels zu vergleichen. Diese Projektion kann zugleich noch Tiefenwerte in Form einer Grauwert- oder Farbcodierung enthalten, um Mehrdeutigkeiten des Vergleichs auszuschließen. Die Projektion erfolgt beispielsweise auf die Grundfläche oder eine Seitenfläche, oder es werden mehrere Projektionen ausgewertet, um die Erkennungssicherheit zu erhöhen. Alternativ zu einer Segmentierung mit reiner Bildauswertung ist denkbar, Marker an dem Beförderungsmittel oder der Ladung zu befestigen, um eine von dem Konturerfassungssensor oder dem Odometriesensor erkennbare Grenze zwischen Beförderungsmittel und Ladung zu bilden.

Die Volumenbestimmungseinheit ist bevorzugt dafür ausgebildet, eine Umhüllende der Gesamtkontur zu bilden und das Volumen der Umhüllenden als Volumen des Objekts zu berechnen. Durch die Umhüllende wird die Volumenberechnung vereinfacht. Außerdem ist zu Abrechnungszwecken nicht unbedingt das mathematische Volumen interessant, sondern der Raum, welcher für Lagerung und Transport verfügbar sein muss und der durch die Umhüllende angegeben wird. Eine mögliche Umhüllende ist die konvexe Hülle. Die Umhüllende kann auch lediglich als Zwischenschritt oder Näherung für das Auffinden eines kleinsten umgebenden Quaders (minimal bounding box) dienen.

Die Volumenmessvorrichtung umfasst bevorzugt ein Identifikationssystem für Objekte und/oder Beförderungsmittel, insbesondere einen Codeleser oder einen RFID-Leser. Damit können eine Vielzahl weiterer Daten, wie eine Zieladresse, Hinweise zum Inhalt einer Ladung, Typ des Beförderungsmittels einschließlich dessen Volumen, Kontur und Gewicht oder dergleichen automatisch erfasst werden. Die Erkennung eines Beförderungsmittels dient vorzugsweise zugleich als Auslöser für die Volumenmessung.

Vorteilhafterweise umfasst die Volumenmessvorrichtung eine Anzeige, auf welcher Anweisungen für das Beförderungsmittel, Fehler, Informationen über Objekt oder Beförderungsmittel und/oder das jeweils bestimmte Volumen anzeigbar sind. Es gibt eine Vielfalt von Informationen, die auf diese Weise zugänglich gemacht werden. So kann dem Fahrer in Form einer Ampel angezeigt werden, ob eine Durchfahrt an der Volumenmessvorrichtung zulässig ist, oder es werden andere Fahranweisungen in Bezug auf Fahrtrichtung, Geschwindigkeit oder eine Wiederholung der Durchfahrt gegeben. Es ist möglich anzuzeigen, ob eine Messung erfolgreich war oder nicht, etwa weil während der Messung erkannt wird, dass die Ladung die Voraussetzungen eines starren Körpers verletzt. Das macht es möglicherweise erforderlich, die Ladung ausnahmsweise doch an einer Messstation abzusetzen oder eine sonstige Sonderbehandlung einzuleiten. Weitere anzeigbare Informationen sind das aktuelle bestimmte Volumen, ausgelesene Codeinformationen oder das erkannte Beförderungsmittel.

Die Volumenmessvorrichtung ist bevorzugt als Portal ausgebildet, welches den Odometriesensor trägt und mehrere, insbesondere vier Konturerfassungssensoren in unterschiedlichen Positionen und Blickrichtungen umfasst, um Teilkonturen aus allen erforderlichen Perspektiven zu erfassen. Das Portal ist vorzugsweise bidirektional, also von beiden Seiten durchfahrbar. Es sind so viele Konturerfassungssensoren vorhanden, dass zumindest die Unterkante des Objekts von Hintergrund unterschieden und alle Teilkonturen der Ober- und Seitenflächen erfasst werden. Das gelingt zuverlässig mit zwei Konturerfassungssensoren von schräg oben und zwei weiteren seitlichen Konturerfassungssensoren. Die Unterfläche ist durch die Ladefläche des Beförderungsmittels bekannt und meist ohnehin eben, wird also bei der Volumenmessung ohne weiteres richtig behandelt. Dem Odometriesensor müssen nicht sämtliche Perspektiven des Objekts zur Verfügung stehen, er wird beispielsweise so montiert, dass die Oberseite und eine Flanke des Objekts erfasst wird. In das Portal oder das Förderfahrzeug kann eine Waage integriert werden, die eine Ladung unter Abzug des bekannten Gewichts des Beförderungsmittels wiegt.

Der Odometriesensor ist bevorzugt als 3D-Kamera ausgebildet. Dafür sind verschiedene Technologien dem Fachmann an sich bekannt. Eine Stereokamera umfasst mindestens zwei Bildsensoren und eine Stereoskopieeinheit, in welcher aus Bilddaten der beiden Bildsensoren eine stereoskopische Entfernungsberechnung ausführbar ist. Analog dem menschlichen Auge werden korrespondierende Merkmale in dem rechten und linken Bild gesucht und aus deren Disparität Tiefenwerte geschätzt. Eine andere 3D-Kamera ist die Lichtlaufzeitkamera, die einen Lichtsender, einen Bildsensor und eine Lichtlaufzeitmesseinheit umfasst, mittels derer für jeden Pixel des Bildsensors eine Lichtlaufzeit zwischen Aussenden eines Lichtstrahls von dem Lichtsender und Registrieren des Lichtstrahls in dem Pixel bestimmbar ist. Der Fachmann kennt ein in den Bildsensor integrierbares Verfahren unter dem Begriff Photomischdetektion.

Der Konturerfassungssensor ist bevorzugt als entfernungsmessender Laserscanner ausgebildet und weist einen Lichtsender zum Aussenden eines Lichtstrahls, einen Lichtempfänger zum Erzeugen eines Empfangssignals aus dem von dem Objekt remittierten Lichtstrahl, eine bewegliche Ablenkeinheit zur periodischen Abtastung des in dem Erfassungsbereich befindlichen Abschnitts sowie eine Lichtlaufzeitbestimmungseinheit zur Entfernungsbestimmung aus der Zeitdifferenz zwischen Aussenden und Empfang des Lichtstrahls auf. Laserscanner sind besonders geeignet, abschnittsweise die Teilkonturen in der erforderlichen Auflösung zu gewinnen. Alternativ ist der Konturerfassungssensor wie der Odometriesensor eine 3D-Kamera. Dabei ist besonders bevorzugt, wenn nur ein zeilenförmiger Bildsensor vorgesehen ist, die 3D-Kamera in diesem Fall also als entfernungsmessende Zeilenkamera mit Lichtlaufzeitmessung für jeden Pixel ihres Bildsensors ausgebildet ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer erfindungsgemäßen Volumenmessvorrichtung;
- Fig. 2: eine perspektivische Darstellung der dreidimensionalen Lage und Ausrichtung der Konturerfassungssensoren und des Odometriesensors gemäß Figur 1:
- Fig. 3: eine Schnittdarstellung durch einen entfernungsmessenden Laserscanner als Beispiel eines Konturerfassungssensors;
- Fig. 4: eine schematische Blockdarstellung einer Stereokamera als Beispiel eines Odometriesensors;
- Fig. 5: eine Blockdarstellung der Volumenmessvorrichtung gemäß Figur 1;
- Fig. 6: ein von einem Odometriesensor aufgenommenes Beispielbild zur Erläuterung der Bewegungsbestimmung;
- Fig. 7: ein Ablaufdiagramm der Bewegungsbestimmung;
- Fig. 8: eine schematische dreidimensionale Darstellung eines leeren Gabelstaplers samt Segmentierungsebene zu dessen Ladung;
- Fig. 9a: eine Grundflächenprojektion eines beladenen Gabelstaplers vor Segmentierung;
- Fig. 9b: eine Grundflächenprojektion des leeren Gabelstaplers gemäß Figur 9a;
- Fig. 9c: eine Darstellung der Korrelationsfunktion zwischen der Projektion des beladenen Gabelstaplers gemäß Figur 9a und des leeren Gabelstaplers gemäß Figur 9b;
- Fig. 9d: eine mittels der Korrelation gemäß Figur 9c gewonnene Grundflächenprojektion der Ladung allein nach erfolgter Segmentierung;
- Fig. 10a: eine seitliche Projektion eines beladenen Gabelstaplers vor Segmentierung;
- Fig. 10b: eine seitliche Projektion des leeren Gabelstaplers gemäß Figur 10a;
- Fig. 10c: eine Darstellung der Korrelationsfunktion zwischen der Projektion des beladenen Gabelstaplers gemäß Figur 10a und des leeren Gabelstaplers gemäß Figur 10a;
- Fig. 10d: eine mittels der Korrelation gemäß Figur 10c gewonnene seitliche Projektion der Ladung allein nach erfolgter Segmentierung;
- Fig. 11 a: eine Darstellung einer Palette mit gleichmäßig verrutschter Ladung;

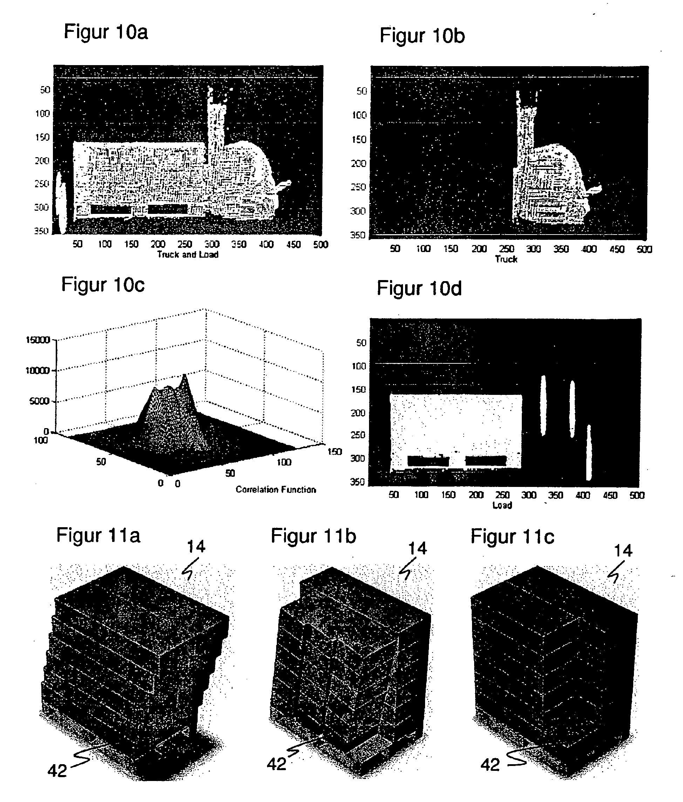

- Fig. 11 b: eine Darstellung einer Palette mit nur teilweise verrutschter Ladung und
- Fig. 11 c: eine Darstellung einer Palette mit teilweise fehlender Ladung.

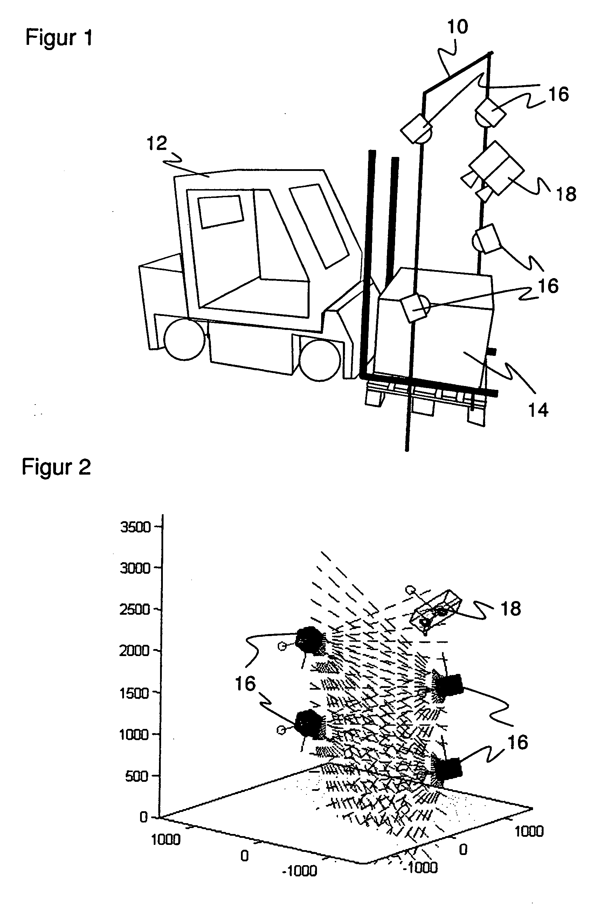

Figur 1 zeigt eine schematische dreidimensionale Darstellung eines Volumenmessportals 10, durch das ein Niederhubwagen oder Gabelstapler 12 mit eine Palette 14 als Ladung hindurchfährt. Aufgabe des Volumenmessportals 10 ist, das Volumen der Palette 14 während der Durchfahrt zu bestimmen. Dazu sind mehrere Konturerfassungssensoren 16 sowie ein Odometriesensor 18 an dem Volumenmessportal 10 montiert.

Obwohl die Erfindung am Beispiel eines Gabelstaplers 12 mit einer Palette 14 beschrieben wird, sind andere Beförderungsmittel und andere zu vermessende Objekte denkbar. Außerdem kann das Volumenmessportal 10 weitere Sensoren umfassen, insbesondere Codeleser oder RFID-Leser zur Identifikation des Gabelstaplers 12, der Palette 14 sowie eine Wiegevorrichtung.

Die Volumenmessung ist im ganz allgemeinen Fall sehr herausfordernd. Es bewegt sich nämlich nicht nur der Gabelstapler 12 selbst, sondern die Palette 14 selbst führt Eigenbewegungen aus, bei der sich die Ladung hin- und herbewegt. Es können eine Reihe von Rahmenbedingungen gesetzt werden, um die Messung zu vereinfachen. Das bedeutet aber keine Beschränkung der Erfindung auf die derart eingegrenzten Fälle, sondern nur, dass die Rahmenbedingungen zu besonders guten Messergebnissen führen.

Eine sehr erleichternde Rahmenbedingungen liegt in der Annahme, die Palette 14 als starren Körper aufzufassen. Die einzelnen Elemente der Palette 14 bewegen sich demnach nur als Ganzes, aber nicht in sich. Weiterhin werden Grenzen für die Geschwindigkeit des Gabelstaplers 12 sowie dessen Abweichungen von einer gleichförmigen Bewegung und für die Dimensionen der Palette 14 vorgegeben. Das Volumen der leeren Palette, also der Boden der Palette 14, wird mitgemessen, könnte aber aufgrund seiner bekannten Dimension leicht berücksichtigt werden. Ebenso mitgemessen wird eine Transportverpackung (stretch-wrap) der Palette 14.

Die Einfahrt des Gabelstaplers 12 in das Volumenmessportal 10 löst die Messung aus. Vorzugsweise wird der Gabelstapler 12 dabei mittels eines an dem Gabelstapler 12 angebrachten RFID-Tags identifiziert. Die Konturerfassungssensoren 16 nehmen jeweils in jedem Stadium der Durchfahrt eine Teilkontur als zweidimensionale Scheibe der Kontur des Gabelstaplers 12 beziehungsweise der Palette 14 auf. Der Odometriesensor 18 bestimmt die Bewegungsbahn des Gabelstaplers, die dafür verwendet wird, die einzelnen Teilkonturen in der richtigen Anordnung zu einer Gesamtkontur von Gabelstapler 12 samt Palette 14 zusammenzusetzen.

Nach der Durchfahrt stehen damit die Dimensionierungsdaten bereit. Sie können in einer übergeordneten Steuerung abgelegt und weiterverarbeitet, aber auch in das RFID-Tag des Gabelstaplers 12, der Palette 14 oder einem Teilobjekt der Palette 14 gespeichert werden. Die Durchfahrt ist von beiden Seiten möglich, zu diesem Zweck können beidseitig RFID-Leser montiert werden.

Eine Anzeige des Volumenmessportals 10 gibt dem Fahrer des Gabelstaplers 12 Hinweise, ob die Messung erfolgreich war. Fehlmessungen ergeben sich beispielsweise, wenn die Durchfahrt zu schnell war, zu stark von einer gerade Bewegung abweicht oder die Ladung der Palette 14 zu ungünstige intrinsische Eigenschaften aufweist. Der Fahrer erhält über die Anzeige Anweisungen für die nächsten Schritte, etwa das Volumenleseportal 10 erneut zu durchfahren. Weitere Daten, wie das ermittelte Volumen bei erfolgreicher Messung, sind darstellbar.

Figur 2 zeigt die räumliche Position und Ausrichtung der Konturerfassungssensoren 16 und des Odometriesensors 18. Dabei werden insgesamt vier Konturerfassungssensoren 16 eingesetzt, um die Unterseite der Palette 14 deutlich von dem Hintergrund zu separieren und mit ausreichender Genauigkeit den oberen und seitlichen Bereich der Palette 14 zu erfassen. Abweichend kann eine andere Anzahl Konturerfassungssensoren 16 verwendet werden, etwa auf einige Konturerfassungssensoren 16 verzichtet werden, wenn diese einen größeren Erfassungsbereich aufweisen. Weiterhin wird ein Odometriesensor 18 eingesetzt, welcher die Oberseite und eine Flanke der Palette 14 erfasst. Je nach Anforderungen der Anwendung kann der Sichtbereich des Odometriesensors 18 abweichen.

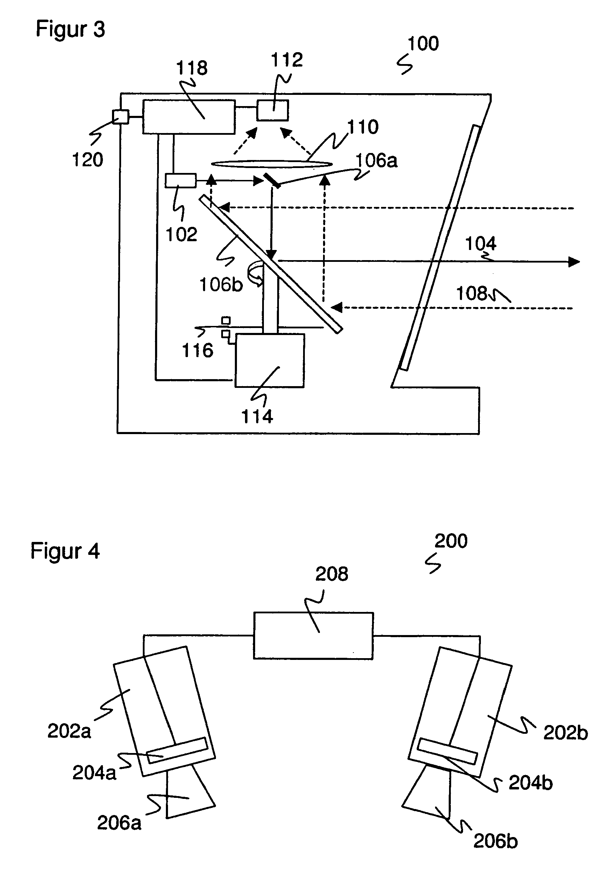

Figur 3 zeigt eine Schnittdarstellung eines entfernungsmessenden Laserscanners 100 als Beispiel für die Ausführung eines Konturerfassungssensors 16. Ein von einem Lichtsender 102, beispielsweise einem Laser, erzeugter Lichtstrahl 104, der einzelne Lichtimpulse aufweist, wird über Lichtablenkeinheiten 106a-b in das Volumenmessportal 10 gelenkt und dort von dem Gabelstapler 12, der Palette 14 oder einem Hintergrundobjekt remittiert. Das remittierte Licht 108 gelangt wieder zu dem Laserscanner 100 zurück und wird dort über die Ablenkeinheit 106b und mittels einer Empfangsoptik 110 von einem Lichtempfänger 112 detektiert, beispielsweise einer Photodiode.

Die Lichtablenkeinheit 106b ist in der Regel als Drehspiegel ausgestaltet, die durch Antrieb eines Motors 114 kontinuierlich rotiert. Die jeweilige Winkelstellung der Lichtablenkeinheit 106b wird über einen Encoder 116 erfasst. Der von dem Lichtsender 102 erzeugte Lichtstrahl 104 überstreicht somit durch die Rotationsbewegung das zu vermessende Objekt 112, 114. Wird remittiertes Lichtsignal 108 in dem Lichtempfänger 112 registriert, so kann aus der Winkelstellung der Ablenkeinheit 106b mittels des Encoders 116 auf die Winkellage des jeweiligen Objektpunkts geschlossen werden, der den Lichtstrahl 104 remittiert.

Zusätzlich wird die Laufzeit der einzelnen Laserlichtpulse von ihrem Aussenden bis zu dem Empfang ermittelt. Aus der Lichtlaufzeit wird unter Verwendung der Lichtgeschwindigkeit auf die Entfernung des Objektpunktes geschlossen. Diese Auswertung erfolgt in einer Auswertungseinheit 118, die dafür mit dem Lichtsender 102, dem Lichtempfänger 112, dem Motor 114 und dem Encoder 116 verbunden ist. Somit stehen an einem Ausgang 120 über den Winkel und die Entfernung zweidimensionale Polarkoordinaten aller Objektpunkte und damit eine Teilkontur desjenigen Abschnitts von Gabelstapler 12 und Palette 14 als entfernungsaufgelöste Bildinformationen zur Verfügung, der sich in dem Erfassungsbereich des Laserscanners 100 beziehungsweise des Konturerfassungssensors 16 befindet.

Figur 4 zeigt in einer schematischen Darstellung den Aufbau einer Stereokamera 200 als Beispiel für eine Ausführung des Odometriesensors 18. Zwei Kameramodule 202a-b sind in einem bekannten festen Abstand zueinander montiert und nehmen jeweils Bilder des Bereichs unter dem Volumenmessportal 10 auf. In jeder Kamera ist ein Bildsensor 204a-b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 204a-b ist ein Objektiv 206a-b mit einer abbildenden Optik zugeordnet.

Zusätzlich kann eine Beleuchtungseinheit zur Ausleuchtung des Bildaufnahmebereichs vorgesehen sein. Um die im Objektbereich vorhandenen visuellen Merkmale nicht durch Schattenbildung zu stören, ist eine homogene, diffuse Beleuchtung wünschenswert.

Eine Stereoskopieverrechnungseinheit 208 ist mit den beiden Bildsensoren 204a-b verbunden und empfängt so Bilddaten in Form von jeweils zwei Rohbildern. Daraus berechnet die Stereoskopieverrechnungseinheit 208 mit Hilfe einer stereoskopischen Disparitätsschätzung eine Tiefenkarte beziehungsweise ein Entfernungsbild mit dreidimensionalen Bilddaten.

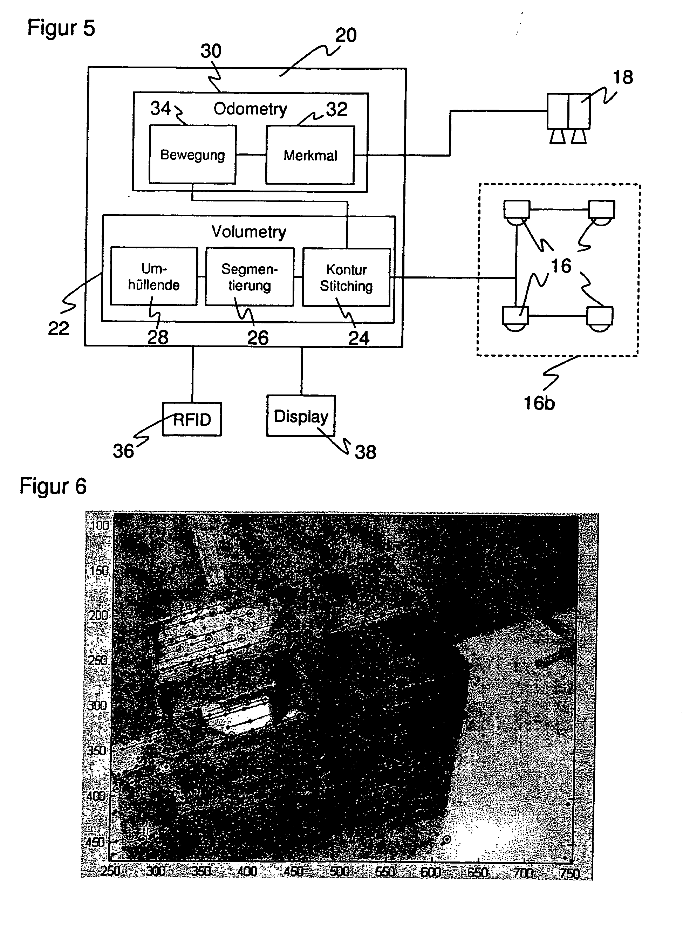

Fig. 5 zeigt den Gesamtaufbau des Volumenmessportals 10 in einem Blockdiagramm. Die Konturerfassungssensoren 16 werden bei der Installation zueinander registriert, so dass die Daten der Teilkonturen in einem gemeinsamen Koordinatensystem erfasst werden. Außerdem verwenden die Konturerfassungssensoren 16 einen Phasenversatz, um sich nicht gegenseitig zu blenden. Damit können die vier Konturerfassungssensoren 16 praktisch wie ein einziger Konturerfassungssensor mit erweitertem Sichtbereich behandelt werden, wie durch die gestrichelte Linie 16b angedeutet. Sofern der Odometriesensor 18 absolute und nicht nur inkrementelle Daten liefern soll, wird er ebenfalls in das gemeinsame Koordinatensystem der Konturerfassungssensoren 16 registriert.

Eine Auswertungseinheit 20, etwa ein hinreichend leistungsstarker PC oder ein beliebiger anderer Rechner, erhält die Daten des Konturerfassungssensors 16 und des Odometriesensors 18. Dabei umfasst die Auswertungseinheit 20 verschiedene Funktionsblöcke, die hier nur grob und unten im Zusammenhang mit den Figuren 6 bis 10 näher erläutert werden. In einer Volumenbestimmungseinheit 22 werden die Teilkonturen der Konturerfassungssensoren 16 zunächst in einem Konturstitching-Block zu einer Gesamtkontur zusammengefügt. Anschließend erfolgt in einem Segmentierungsblock 26 die Abtrennung des Gabelstaplers 12 von der Palette 14. Schließlich wird in einem Umhüllendenblock 28 die kleinste Umhüllende (minimal bounding box) bestimmt und daraus das gesuchte Volumen errechnet.

In einer Bewegungsbestimmungseinheit 30 extrahiert ein Merkmalsblock 32 aus den Bilddaten des Odometriesensors 18 visuelle Merkmale wie Ecken und Kanten. Auf deren Basis wird in einem Bewegungsblock 34 die Bewegungsbahn des Gabelstaplers 12 und dessen Palette 14 berechnet, wobei der Konturstitching-Block der Volumenbestimmungseinheit 22 diese Information nutzt, um die einzelnen Teilkonturen in korrekter Weise zu der Gesamtkontur zusammenzufügen.

Ein RFID-Leser 36 identifiziert den Gabelstapler 12 und triggert die Volumenmessung. Messergebnisse sowie Anweisungen im Zusammenhang mit der Durchführung der Messung oder der Fehlerbehandlung werden auf einer Anzeige 38 ausgegeben. RFID-Leser 36 und Anzeige 38 können doppelt auf beiden Seiten des Volumenmessportals 10 vorgesehen sein, um eine Durchfahrt in beiden Richtungen zu ermöglichen.

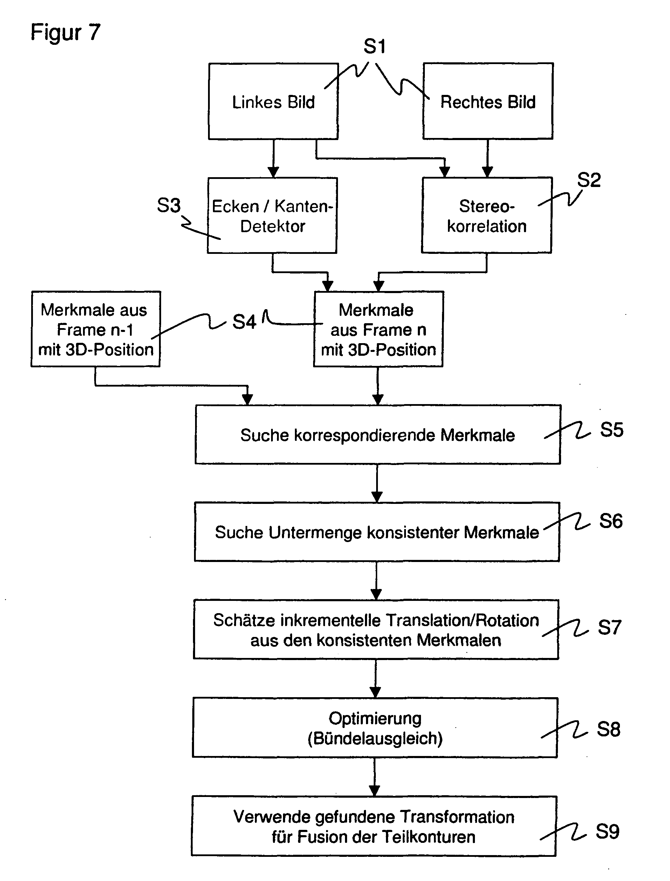

Das Verfahren zur Bewegungsbestimmung wird nun anhand einer Beispielaufnahme des Odometriesensors 18 in Figur 6 und des Ablaufdiagramms der Figur 7 näher erläutert.

In einem ersten Schritt S1 nimmt der Odometriesensor 18 je ein linkes Bild und ein rechtes Bild mit den beiden Bildsensoren der Stereokamera auf. Aus diesen beiden Einzelbildern wird in einem zweiten Schritt S2 mittels Stereokorrelation in der Stereoskopieverrechnungseinheit 208 ein dreidimensionales Bild berechnet. Parallel oder zeitversetzt dazu wird in einem Schritt S3 ein Ensemble von robusten visuellen Merkmalen bestimmt, beispielsweise durch Ecken-/Kantendetektion auf den Bilddaten des linken Bildes. Anstelle des linken Bildes könnte hierfür auch das rechte Bild oder eine Kombination beider Einzelbilder genutzt werden. Als robuste visuelle Merkmale werden nur solche akzeptiert, zu denen auch die Stereokorrelation in Schritt S2 einen verlässlichen Tiefenwert bestimmt.

In einem Schritt S4 stehen somit die aktuellen visuellen Merkmale des Frame n sowie früher erfasste visuelle Merkmale des Frame n-1 samt deren 3D-Position bereit. In einem Schritt S5 werden nun zueinander korrespondierende visuelle Merkmale in Frame n und Frame n-1 gesucht. Dazu wird, prinzipiell ganz analog dem Stereoalgorithmus, der ja ebenfalls korrespondierende Merkmale in zwei Bildern sucht, mit einer Korrelation die Umgebung der zu testenden Merkmalspaare aus Frame n und Frame n-1 verglichen. Dafür sind verschiedene Maße wie SAD (sum of absolute difference) oder least mean square geeignet. Der Vergleich wird zweimal in beide Richtungen ausgeführt, d.h. es wird geprüft, ob Merkmal p in Frame n-1 die beste Übereinstimmung mit Merkmal q in Frame n hat und umgekehrt.

Sobald sämtliche korrespondierenden Merkmale gefunden sind, wird in einem Schritt S6 die größte Untermenge derjenigen Merkmale aufgefunden, die mit der Bewegung eines starren Körpers oder einem anderen Modell für die In-Sich-Bewegung der Palette 14 konsistent sind. Dabei bedeutet starrer Körper, dass es keine Relativbewegungen der Elemente des Körpers gibt, und in der praktischen Auswirkung, dass jeweils der euklidische Abstand aller Paare von zwei identischen Merkmalspunkten in Frame n-1 und Frame n bis auf höchstens eine Fehlertoleranzgrenze übereinstimmt.

Aus dieser größten Untermenge des Schritts S6 wird im Schritt S7 die optimale Transformation, also im Falle der Zulässigkeit beliebiger Bewegungsbahnen der Palette 14, eine Kombination aus Rotation und Translation bestimmt, welche diese visuellen Merkmale des Frame n-1 bestmöglich in die visuellen Merkmale des Frame n überführt.

In dem Beispiel der Figur 6 zeigen die Grauwerte im Hintergrund das Bild einer Palette 14, auf dem die Bewegungsbestimmungseinheit 20 im Vordergrund die korrespondierenden visuellen Merkmale extrahiert hat. Dabei zeigen die dunkleren Punkte und Verbindungslinien solche visuellen Merkmale, die im Schritt S6 als konsistent mit der Bewegung eines starren Körpers angesehen wurden. Da sich die visuellen Merkmale in unterschiedlichen Tiefen befinden, wird im Vergleich zu einer 2D-Objektverfolgung ein deutlich genaueres Ergebnis erzielt. Die Zahl der erkennbaren visuellen Merkmale ist ein Gütemaß für die Bestimmung der Bewegung.

Bei diesem inkrementellen Verfahren, zu dessen weiteren Details auf Howard A., "Real-Time Stereo Visual Odometry for Autonomous Ground Vehicles", in: Proceedings of the IEEE/RSJ International Conference on Intelligent Robots and Systems, 2008, pp. 3946-3952.3 verwiesen wird, können sich mit fortschreitender Bewegung des Gabelstaplers 12 und dessen Palette 14 die Einzelfehler aufakkumulieren. Um dies auszugleichen, erfolgt in einem Schritt S8 eine Optimierung. Dabei wird ausgenutzt, dass sich die visuellen Merkmale meist über mehr als zwei aufeinanderfolgende Frames nachweisen lassen, typischerweise über drei bis vier Frames. Mit Hilfe eines Bündelblockausgleichsverfahrens kann die Bewegungsbahn weiter optimiert werden, um die inkrementellen Fehler zu reduzieren. Dabei werden in dieser Anwendung des Bündelblockausgleichsverfahrens die intrinsischen Parameter der Kamera festgehalten und die geschätzten 3D-Positionen der visuellen Merkmale mit der Rotation und der Translation als Funktion der Zeit optimiert. Details zur weiteren Umsetzung des Bündelblockausgleichsverfahrens sind beispielsweise in B. Triggs; P. McLauchlan and R. Hartley and A. Fitzgibbon (1999). "Bundle Adjustment — A Modern Synthesis". ICCV '99: Proceedings of the International Workshop on Vision Algorithms. Springer-Verlag. pp. 298-372. doi:1 0.1 007/3-540-44480-7 _21. ISBN 3-540-67973-1 beschrieben.

In einem abschließenden Schritt S9 der Bewegungsbestimmung wird die gefundene Transformation, also die erforderliche Translation/Rotation von einer Teilkontur auf die nächste, an die Volumenbestimmungseinheit 22 ausgegeben, wo sie zum korrekten Zusammenfügen zu einer Gesamtkontur verwendet wird.

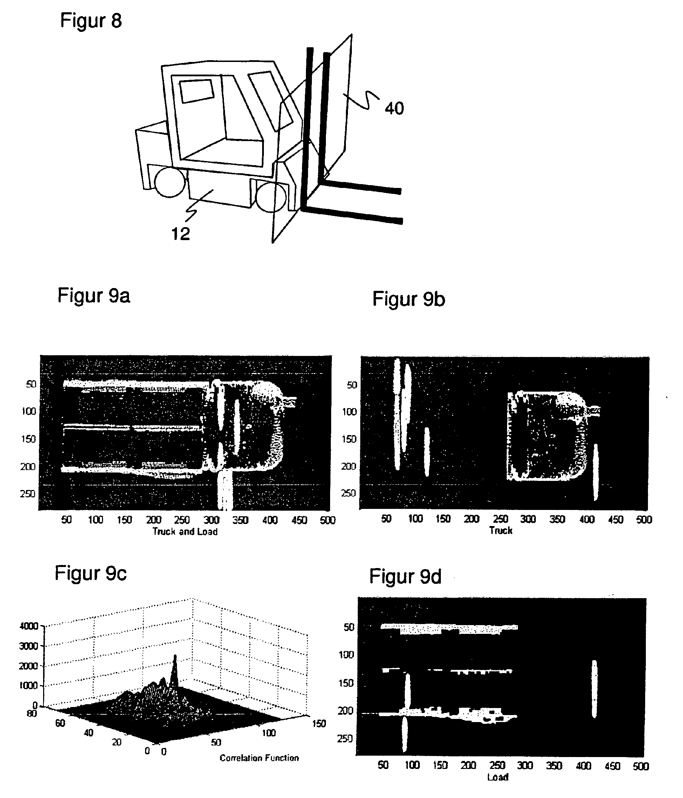

Im Anschluss an die Gesamtkonturerfassung erfolgt wie nun anhand der Figuren 8 bis 10 beschrieben eine Segmentierung in der Segmentierungseinheit 26, um die Palette 14 von dem Gabelstapler 12 zu trennen. Figur 8 zeigt zunächst den Gabelstapler 12 sowie letztlich die zu bestimmende Segmentierungsebene 40. Neben der sogleich zu beschreibenden reinen Bildverarbeitungslösung kann die Segmentierung durch visuelle Marker unterstützt oder ersetzt werden, welche die Segmentierungsebene 40 für die Konturerfassungssensoren 16 oder den Odometriesensor 18 erkennbar machen.

Figur 9a zeigt eine Grundflächenprojektion der Gesamtkontur, somit des Gabelstaplers 12 sowie der Palette 14, als Schwarzweißbild. Figur 9b zeigt dieselbe Darstellung des Gabelstaplers 12, die der Segmentierungseinheit 26 durch Projektion der Referenzkontur des Gabelstaplers bekannt ist, sei es durch Einlernen, Konfiguration oder Auslesen aus einem RFID-Tag des Gabelstaplers 12. Anhand einer in Figur 9c dargestellten Kreuzkorrelation des Bildes des Gabelstaplers 12 der Figur 9b mit der Projektion der Figur 9a wird die Lage des Gabelstaplers 12 aufgefunden und der leere Gabelstapler 12 dann aus der Gesamtkontur entfernt. In Figur 9d ist eine Projektion des Ergebnisses gezeigt, nämlich der isolierten Palette 14.

Genaugenommen muss vor dem Ergebnis der Figur 9d auch eine Erkennung in seitlicher Richtung erfolgen. Aus der Kreuzkorrelation in Grundflächenprojektion ist die Orientierung des Gabelstaplers 12 in Querrichtung bekannt. Auf ganz ähnliche Weise wie zu Figur 9 erläutert, wird nun mit einer seitlichen Projektion anstelle einer Grundflächenprojektion gearbeitet, wie dies die Figuren 10a-d zeigen. Ganz analog zu Figur 9 zeigt Figur 10a die seitliche Projektion von Gabelstapler 12 und Palette 14, Figur 10b die seitliche Projektion des Gabelstaplers 12 allein, Figur 10c eine Kreuzkorrelation aus beidem und Figur 10d eine seitliche Projektion der nach Segmentierung resultierenden Gesamtkontur der Palette 14 allein.

Um die Genauigkeit der Segmentierung weiter zu verbessern, kann anstelle von Schwarzweißbildern eine grauwert- oder farbcodierte Tiefenkarte aus der jeweiligen seitlichen Perspektive oder der Vogelperspektive verwendet werden.

Aus der absegementierten Gesamtkontur der Palette 14 wird abschließend in dem Umhüllen den block 28 mit an sich bekannten Verfahren die kleinste Umhüllende ermittelt. Denn es ist nicht gesichert, dass die verbleibende Punktewolke, aus denen die Gesamtkontur besteht, keine inneren Punkte aufweist, wie etwa im Falle von Gitterstrukturen oder ähnlichen Ladungen. Die Umhüllende ist dann Grundlage für ein einfaches, handhabbares Maß für das Volumen.

Es ist denkbar, zusätzlich zu der Primärinformationen Volumen auch sekundäre Informationen auszugeben. Das ist beispielsweise eine Klassifikation des vermessenen Objekts, insbesondere in Bezug auf Fragen wie ob die Oberfläche der Palette 14 eben und waagerecht ist und ob eine weitere Palette aufgestapelt werden kann. Ermittelt werden können weiterhin Informationen über eine Beschädigung, fehlerhafte Stapelung innerhalb der Palette 14, Änderungen der Außengeometrie durch hervorstehende oder verschobene Teilobjekte sowie eine Vollständigkeits- und damit auch Diebstahlkontrolle.

Figur 11 zeigt beispielhaft einige solche Fälle, die bei der Volumenmessung erkannt werden können. Dabei sind in Figur 11a sämtliche Teilobjekte 42 der Palette insgesamt wie bei einer Scherung verrutscht, in Figur 11b nur einige der Teilobjekte 42. In Figur 11c dagegen fehlen einige Teilobjekte 42. RFID-Informationen der Palette 14 können Auskunft darüber geben, ob dies beabsichtigt oder Folge des Transports beziehungsweise eines Diebstahls ist.

In vielen Anwendungen ist wünschenswert, die Anforderungen an eine eichpflichtige Messung zu erfüllen, vgl. OIML, "Multi-dimensional measuring instruments", Internationale Recommendation, OIML R129, 2009. Die Genauigkeitsanforderungen hängen dabei von der Größe der zu vermessenden Objekte ab. Für Objekte mit Minimalgröße 200 x 200 x 200 mm³ wird eine Messunsicherheit von weniger als ±20mm gefordert.

Messfehler entstehen in erster Linie aus Messungenauigkeiten der Konturerfassungssensoren und der Bewegungsbestimmung. Hinzu kommen Registrierungsfehler der Konturerfassungssensoren 16 und des Odometriesensors 18. Eine temperaturabhängige Ausdehnung des Volumenmessportals 10 trägt nicht entscheidend zum Fehler bei.

Die Messfehler der Konturerfassungssensoren 16 lassen sich unter ±4mm halten. Für die Bewegungsbestimmung ist maßgeblich, wie genau die 3D-Position eines visuellen Merkmals bestimmbar ist und wie viele visuelle Merkmale in Konsistenz mit dem Eigenbewegungsmodell der Palette 14, etwa als starrer Körper, überhaupt gefunden werden können. Es lässt sich eine Grenze von grob fünfzig zu erkennenden visuellen Merkmalen in jedem Frame angeben. Die visuellen Merkmale sind typischerweise über drei oder vier Frames stabil. Bei einer solchen Anzahl visueller Merkmale kann die nominelle Auflösung des Odometriesensors 18 von ±40mm um etwa einen Faktor sieben reduziert werden. Das Gute bei dieser Abschätzung ist, dass das Volumenmessportal 10 nach der Messung die Anzahl der visuellen Merkmale kennt und somit selbst entscheiden kann, ob die Messung genau genug war oder nicht. Somit werden keine falschen Messwerte verarbeitet, sondern beispielsweise die Messung wiederholt.

Der Registrierungsfehler schließlich trägt mit nicht mehr als ±3mm bei. Damit lässt sich unter der Annahme gaussischer Fehlerverteilung sagen, dass eine 3σ-Vertrauensgrenze zur Einhaltung der Anforderungen an die Eichpflicht erreichbar ist. Weitere Verbesserungen der Messgenauigkeit sind durch zusätzliche visuelle Merkmale zu erzielen, etwa indem die oben genannte Grenze von fünfzig auf hundert visuelle Merkmale erhöht oder einen passenden anderen Wert gesetzt wird.

## Patentansprüche

1. Volumenmessvorrichtung (10) für bewegte Objekte (14), insbesondere die Ladung (14) eines Beförderungsmittels (12), mit mindestens einem Konturerfassungssensor (16), mittels dessen jeweils eine dreidimensionale Teilkontur eines in einem Erfassungsbereich des Konturerfassungssensors (16) befindlicher Abschnitts des Objektes (14) erfassbar ist, sowie mit einer Volumenbestimmungseinheit (22), die dafür ausgebildet ist, die abschnittsweise erfassten Teilkonturen zu einer Gesamtkontur des Objektes (14) zusammenzusetzen und aus der Gesamtkontur das Volumen des Objekts (14) zu bestimmen, **gekennzeichnet durch**
einen Odometriesensor (18), mit dem ein dreidimensionales Bild des Objekts (14) aufnehmbar ist, sowie eine Bewegungsbestimmungseinheit (30), in der aus zeitlich aufeinanderfolgenden dreidimensionalen Bildern des Objekts (14) die Bewegung des Objekts (14) bestimmbar ist, wobei die Volumenbestimmungseinheit (22) weiterhin dafür ausgebildet ist, die abschnittsweise erfassten Teilkonturen unter Berücksichtigung der von der Bewegungsbestimmungseinheit bestimmten Bewegung des Objekts (14) zu der Gesamtkontur zusammenzusetzen.

2. Volumenmessvorrichtung (10) nach Anspruch 1,
wobei der Odometriesensor (18) eine Merkmalserkennungseinheit (32) aufweist, mit der robuste visuelle Merkmale identifizierbar sind, insbesondere Ecken oder Kanten, und wobei die Bewegung des Objekts (14) in der Bewegungsbestimmungseinheit (30) anhand der dreidimensionale Lage der visuellen Merkmale bestimmbar ist.

3. Volumenmessvorrichtung (10) nach Anspruch 2,
wobei die Bewegungsbestimmungseinheit (30) dafür ausgebildet ist, die Bewegung des Objekts (14) inkrementell aus derjenigen Translation und/oder Rotation zu bestimmen, mit der die visuellen Merkmale aus zu verschiedenen Zeitpunkten aufgenommenen dreidimensionalen Bildern bestmöglich ineinander überführt werden.

4. Volumenmessvorrichtung (10) nach Anspruch 2 oder 3,
wobei die Bewegungsbestimmungseinheit (30) dafür ausgebildet ist, die Übereinstimmung visueller Merkmale über mehr als zwei dreidimensionale Bilder auszuwerten, insbesondere durch Objektverfolgung oder ein Bündelblockausgleichsverfahren.

5. Volumenmessvorrichtung (10) nach einem der vorhergehenden Ansprüche mit einer Segmentierungseinheit (26), die dafür ausgebildet ist, eine Gesamtkontur nur des Objekts (14) getrennt von dem Beförderungsmittel (12) zu erzeugen, wobei insbesondere Eigenschaften des Beförderungsmittels (12) in der Segmentierungseinheit (26) gespeichert sind.

6. Volumenmessvorrichtung (10) nach Anspruch 5,
wobei die Segmentierungseinheit (26) dafür ausgebildet ist, eine zweidimensionale Projektion der Gesamtkontur zu erzeugen und mit Referenzdaten des Beförderungsmittels (12) zu vergleichen, insbesondere eine Projektion auf die Grundfläche und/oder die Seitenfläche.

7. Volumenmessvorrichtung (10) nach einem der vorhergehenden Ansprüche, wobei die Volumenbestimmungseinheit (22, 28) dafür ausgebildet ist, eine Umhüllende der Gesamtkontur zu bilden, insbesondere eine konvexe Hülle oder eine minimal bounding box, und das Volumen der Umhüllenden als Volumen des Objekts (14) zu berechnen.

8. Volumenmessvorrichtung (10) nach einem der vorhergehenden Ansprüche, die ein Identifikationssystem (36) für Objekte (14) und/oder Beförderungsmittel (12) umfasst, insbesondere einen Codeleser oder einen RFID-Leser.

9. Volumenmessvorrichtung (10) nach einem der vorhergehenden Ansprüche, die eine Anzeige (38) umfasst, auf welcher Anweisungen für das Beförderungsmittel (12), Fehler, Informationen über Objekt (14) oder Beförderungsmittel (14) und/oder das jeweils bestimmte Volumen anzeigbar sind.

10. Volumenmessvorrichtung (10) nach einem der vorhergehenden Ansprüche, die als Portal ausgebildet ist, welches den Odometriesensor (18) trägt und mehrere, insbesondere vier Konturerfassungssensoren (16) in unterschiedlichen Positionen und Blickrichtungen umfasst, um Teilkonturen aus allen erforderlichen Perspektiven zu erfassen.

11. Volumenmessvorrichtung (10) nach einem der vorhergehenden Ansprüche, wobei der Odometriesensor (18) als 3D-Kamera ausgebildet ist, insbesondere als Stereokamera (200) mit mindestens zwei Bildsensoren (204a-b) und einer Stereoskopieeinheit (208), in welcher aus Bilddaten der beiden Bildsensoren (204a-b) eine stereoskopische Entfernungsberechnung ausführbar ist, oder als Lichtlaufzeitkamera mit einem Lichtsender, einem Bildsensor und einer Lichtlaufzeitmesseinheit, mittels derer für jeden Pixel des Bildsensors eine Lichtlaufzeit zwischen Aussenden eines Lichtstrahls von dem Lichtsender und Registrieren des Lichtstrahls in dem Pixel bestimmbar ist.

12. Volumenmessvorrichtung (10) nach einem der vorhergehenden Ansprüche, wobei der Konturerfassungssensor (16) als entfernungsmessender Laserscanner (100) ausgebildet ist und einen Lichtsender (102) zum Aussenden eines Lichtstrahls (104), einen Lichtempfänger (112) zum Erzeugen eines Empfangssignals aus dem von dem Objekt (14) remittierten Lichtstrahl (108), eine bewegliche Ablenkeinheit (106a-b) zur periodischen Abtastung des in dem Erfassungsbereich befindlichen Abschnitts sowie eine Lichtlaufzeitbestimmungseinheit (118) zur Entfernungsbestimmung aus der Zeitdifferenz zwischen Aussenden und Empfang des Lichtstrahls (104, 108) aufweist, oder wobei der Konturerfassungssensor eine 3D-Kamera, insbesondere eine entfernungsmessende Zeilenkamera mit Lichtlaufzeitmessung für jeden Pixel ihres Bildsensors ist.

13. Verfahren zur Volumenmessung bewegter Objekte (14), insbesondere der Ladung (12) eines Beförderungsmittels (12), bei dem mit mindestens einem Konturerfassungssensor (16) jeweils eine dreidimensionale Teilkontur eines in einem Erfassungsbereich des Konturerfassungssensors (16) befindlichen Abschnitts, insbesondere eine Scheibe, des Objektes (14) erfasst wird, die abschnittsweise erfassten Teilkonturen zu einer Gesamtkontur des Objektes (14) zusammengesetzt und aus der Gesamtkontur das Volumen des Objekts (14) bestimmt wird,
**dadurch gekennzeichnet,**
**dass** mit einem Odometriesensor (18) dreidimensionale Bilder des Objekts (14) aufgenommen werden und aus zeitlich aufeinanderfolgenden dreidimensionalen Bildern des Objekts (14) die Bewegung des Objekts (14) bestimmt wird, wobei die abschnittsweise erfassten Teilkonturen unter Berücksichtigung der bestimmten Bewegung des Objekts (14) zu der Gesamtkontur zusammengesetzt werden.

14. Verfahren nach Anspruch 13,
wobei robuste visuelle Merkmale identifiziert werden, insbesondere Ecken oder Kanten, und die Bewegung des Objekts (14) anhand der dreidimensionale Lage der visuellen Merkmale bestimmt wird, insbesondere inkrementell aus derjenigen Translation und/oder Rotation, mit der die visuellen Merkmale aus zu verschiedenen Zeitpunkten aufgenommenen dreidimensionalen Bildern bestmöglich ineinander überführt werden.

15. Verfahren nach Anspruch 13 oder 14,
wobei unter Verwendung bekannter Eigenschaften des Beförderungsmittels (12) eine Gesamtkontur nur des Objekts (14) getrennt von dem Beförderungsmittel (12) erzeugt wird, insbesondere indem eine zweidimensionale Projektion der Gesamtkontur mit Referenzdaten des Beförderungsmittels verglichen wird.

## Claims

1. A volume measuring apparatus (10) for moving objects (14), in particular the load (14) of transport means (12), having at least one contour detection sensor (16) for detecting a respective three-dimensional partial contour of a section of the object being in a detection area of the contour detection sensor (16), and having a volume determining unit (22) configured to compose an overall contour of the object (14) from the partial contours detected in sections and to determine the volume of the object (14) from the overall contour,
**characterized by**
an odometry sensor (18) for recoding a three-dimensional image of the object (14), and by a movement detection unit (30) for determining the movement of the object (14) from chronologically successive three-dimensional images of the object (14), wherein the volume determination unit (22) is further configured to compose the overall contour from the partial contours detected in sections taking account of the movement of the object (14) determined by the movement detection unit (30).

2. The volume measuring apparatus (10) according to claim 1,
wherein the odometry sensor (18) comprises a feature detection unit (32) for identifying robust visual features, in particular corners or edges, and wherein the movement of the objects (14) is determined in the movement detection unit (30) based on the three-dimensional position of the visual features.

3. The volume measuring apparatus (10) according to claim 2,
wherein the movement detection unit (30) is configured to determine the movement of the object (14) incrementally from that translation and/or rotation that optimally matches the visual features from three-dimensional images recorded at different points in time.

4. The volume measuring apparatus (10) according to claim 2 or 3,
wherein the movement detection unit (30) is configured to evaluate the matching of visual features across more than two three-dimensional images, in particular by object tracking or a bundle adjustment method.

5. The volume measuring apparatus (10) according to any of the preceding claims, having a segmentation unit (26) configured to generate an overall contour of only the object (14) separated from the transport means (12), wherein in particular properties of the transport means (12) are stored in the segmentation unit (26).

6. The volume measuring apparatus (10) according to claim 5,
wherein the segmentation unit (26) is configured to generate a two-dimensional projection of the overall contour and to compare the projection with reference data of the transport means (12), in particular a projection onto the base surface and/or the side surface.

7. The volume measuring apparatus (10) according to any of the preceding claims, wherein the volume determination unit (22, 28) is configured to generate an envelope of the overall contour, in particular a convex hull or a minimal bounding box, and to calculate the volume of the envelope as the volume of the object (14).

8. The volume measuring apparatus (10) according to any of the preceding claims, comprising an identification system (36) for objects (14) and/or transport means (12), in particular a code reader or an RFID reader.

9. The volume measuring apparatus (10) according to any of the preceding claims, comprising a display (38) for displaying instructions for the transport means (12), errors, information about object (14) or transport means (12) and/or the respective volume as determined.

10. The volume measuring apparatus (10) according to any of the preceding claims, configured as a portal supporting the odometry sensor (18) and comprising a plurality of contour detection sensors (16), in particular four contour detection sensors (16) in different positions and orientations, to detect partial contours from all required perspectives.

11. The volume measuring apparatus (10) according to any of the preceding claims, wherein the odometry sensor (18) is configured as a 3D-camera, in particular a stereo camera (200) having at least two images sensors (204a-b) and a stereoscopic unit (208) for performing a stereoscopic distance calculation from image data of the two image sensors (204a-b), or as a light time of flight camera having a light transmitter, an image sensor and a light time of flight measuring unit for determining, for each pixel of the image sensor, a light time of flight from transmission of a light beam by the light transmitter and detection of the light beam in the pixel.

12. The volume measuring apparatus (10) according to any of the preceding claims, wherein the contour detection sensor (16) is configured as a distance measuring laser scanner (100) comprising a light transmitter (102) for transmitting a light beam (104), a light receiver (112) for generating a reception signal from a remitted light beam (108) remitted by the object (14), a movable deflection unit (1 06a-b) for periodically scanning the section being in the detection area, and a light time of flight determination unit (11 (8) for a distance determination from a time difference between transmission and reception of the light beam (104, 108), or wherein the contour detection sensor (16) is a 3D-camera, in particular a distance measuring line camera with a light time of flight measurement for each pixel of its image sensor.

13. A method for measuring volumes of moving objects (14), in particular the load (12) of transport means (12), where by means of a contour detection sensor (16) a respective three-dimensional partial contour of a section, in particular a slice, of the object (14) being in a detection area of the contour detection sensor (16) is detected, the partial contours detected in sections are composed to an overall contour of the object (14), and the volume of the object (14) is determined from the overall contour,
**characterized in that**
three-dimensional images of the object (14) are recorded by an odometry sensor (18), and from the chronological successive three-dimensional images of the object (14) the movement of the object (14) is determined, wherein the partial contours detected in sections are composed to the overall contour taking account of the determined movement of the object (14).

14. The method according to claim 13,
wherein robust visual features are identified, in particular corners or edges, and the movement of the object (14) is determined based on the three-dimensional position of the visual features, in particular incrementally from that translation and/or rotation optimally matching the visual features from three-dimensional images recorded at different points in time.

15. The method according to claim 13 or 14,
wherein an overall contour of only the object (14) separated from the transport means (12) is generated using known properties of the transport means (12), in particular by comparing a two-dimensional projection of the overall contour with reference data of the transport means (12).

## Revendications

1. Dispositif de mesure de volume (10) pour objets mobiles (14), en particulier le chargement (14) d'un moyen de convoyage (12), comprenant au moins un capteur de détection de contour (16) au moyen duquel il est possible de détecter respectivement un contour partiel tridimensionnel d'un tronçon de l'objet (14) qui se trouve dans une zone de détection du capteur de détection de contour (16), et comprenant une unité de détermination de volume (22) qui est réalisée pour recomposer les contours partiels détectés par tronçons en donnant un contour d'ensemble de l'objet (14) et déterminer le volume de l'objet (14) à partir du contour d'ensemble,
**caractérisé par**
un capteur odométrique (18) au moyen duquel une image tridimensionnelle de l'objet (14) peut être enregistrée, ainsi qu'une unité de détermination de mouvement (30) dans laquelle le déplacement de l'objet (14) peut être déterminé à partir d'images tridimensionnelles de l'objet (14) qui se suivent dans le temps, dans lequel l'unité de détermination de volume (22) est en outre réalisée pour recomposer les contours partiels détectés par tronçons en donnant le contour d'ensemble en tenant compte du mouvement de l'objet (14) déterminé par l'unité de détermination de mouvement.

2. Dispositif de mesure de volume (10) selon la revendication 1,
dans lequel le capteur odométrique (18) comprend une unité de reconnaissance de caractéristiques (32) au moyen de laquelle il est possible d'identifier des caractéristiques visuelles robustes, en particulier des coins ou des arêtes, et dans lequel le mouvement de l'objet (14) peut être déterminé dans l'unité de détermination de mouvement (30) au moyen de la situation tridimensionnelle des caractéristiques visuelles.

3. Dispositif de mesures de volume (10) selon la revendication 2,
dans lequel l'unité de détermination de mouvement (30) est réalisée pour déterminer le mouvement de l'objet (14) de façon incrémentale à partir de la translation et/ou de la rotation au moyen de laquelle les caractéristiques visuelles se transforment le mieux possible les unes dans les autres à partir d'images tridimensionnelles enregistrées à des instants différents.

4. Dispositif de mesure de volume (10) selon la revendication 2 ou 3, dans lequel l'unité de détermination de mouvement (30) est réalisée pour évaluer la coïncidence de caractéristiques visuelles sur plus de deux images tridimensionnelles, en particulier par une poursuite d'objets ou par un procédé d'égalisation de blocs de faisceaux.

5. Dispositif de mesure de volume (10) selon l'une des revendications précédentes, comprenant une unité de segmentation (26) qui est réalisée pour produire un contour d'ensemble de l'objet (14) uniquement séparément du moyen de convoyage (12), et des propriétés du moyen de convoyage (12) sont en particulier mémorisées dans l'unité de segmentation (26).

6. Dispositif de mesure de volume (10) selon la revendication 5,
dans lequel l'unité de segmentation (26) est réalisée pour produire une projection bidimensionnelle du contour d'ensemble et la comparer avec des données de référence du moyen de convoyage (12), en particulier une projection sur la surface de base et/ou sur la surface latérale.

7. Dispositif de mesure de volume (10) selon l'une des revendications précédentes, dans lequel l'unité de détermination de volume (22, 28) est réalisée pour former une enveloppante du contour d'ensemble, en particulier une enveloppe convexe pour une boîte frontière minimale, et pour calculer le volume de l'enveloppante à titre de volume de l'objet (14).

8. Dispositif de mesure de volume (10) selon l'une des revendications précédentes, qui comprend un système d'identification (36) pour des objets (14) et/ou du moyen de convoyage (12), en particulier un lecteur de code ou un lecteur RFID.

9. Dispositif de mesure de volume (10) selon l'une des revendications précédentes, qui comprend un affichage (38) sur lequel il est possible d'afficher des instructions pour le moyen de convoyage (12), des erreurs, des informations concernant l'objet (14) ou sur le moyen de convoyage (14) et/ou le volume respectivement déterminé.

10. Dispositif de mesure de volume (10) selon l'une des revendications précédentes, réalisé sous forme de portique, lequel porte le capteur odométrique (18) et comprend plusieurs capteurs de détection de contour (16), en particulier quatre, dans des positions différentes et dans des directions d'observations différentes, afin de détecter des contours partiels depuis toutes les perspectives nécessaires.

11. Dispositif de mesure de volume selon l'une des revendications précédentes, dans lequel le capteur odométrique (18) est réalisé sous forme de caméra 3D, en particulier sous forme de caméra stéréoscopique (200) comprenant au moins deux capteurs d'images (204a-b) et une unité stéréoscopique (208) dans laquelle il est possible d'exécuter un calcul d'éloignement stéréoscopique à partir des données image des deux capteurs d'images (204a-b), ou sous forme de caméra à temps de parcours de la lumière, au moyen de laquelle il est possible de déterminer un temps de parcours de la lumière pour chaque pixel du capteur d'image entre l'émission d'un rayon lumineux depuis l'émetteur de lumière et l'enregistrement du rayon lumineux dans le pixel.

12. Dispositif de mesure de volume (10) selon l'une des revendications précédentes,
dans lequel le capteur de détection de contour (16) est réalisé sous forme de scanner à laser (100) assurant une mesure de distance, et comprend un émetteur de lumière (102) pour émettre un rayon de lumière (104), un récepteur de lumière (112) pour engendrer un signal de réception à partir du rayon de lumière (108) réémis depuis l'objet (14), une unité de déflexion mobile (106a-b) pour le palpage périodique du tronçon qui se trouve dans la zone de détection, ainsi qu'une unité de détermination de temps de parcours de la lumière (118) pour la détermination de l'éloignement à partir de la différence temporelle entre l'émission et la réception du rayon lumineux (104, 108), ou bien dans lequel le capteur de détection de contour est une caméra 3D, en particulier une caméra en ligne assurant une mesure de distance avec une mesure du temps de parcours de la lumière pour chaque pixel de son capteur d'image.

13. Procédé pour la mesure de volume d'objets mobiles (14), en particulier le chargement (12) d'un moyen de convoyage (12), dans lequel avec au moins un capteur de détection de contour (16) on détecte respectivement un contour partiel tridimensionnel d'un tronçon qui se trouve dans la zone de détection du capteur de détection de contour (16), en particulier une plaque, de l'objet (14), les contours partiels détectés par tronçons sont regroupés en donnant un contour d'ensemble de l'objet (14), et le volume de l'objet (14) est déterminé à partir du contour d'ensemble,
**caractérisé en ce que**
on enregistre des images tridimensionnelles de l'objet (14) avec un capteur odométrique (18), et on détermine le mouvement de l'objet (14) à partir d'images tridimensionnelles de l'objet (14) qui se suivent dans le temps, dans lequel les contours partiels détectés par tronçon sont regroupés en donnant le contour d'ensemble en tenant compte du mouvement déterminé de l'objet (14).

14. Procédé selon la revendication 13,
dans lequel on identifie des caractéristiques visuelles robustes, en particulier des coins ou des arêtes, et le mouvement de l'objet (14) est déterminé au moyen de la situation tridimensionnelle des caractéristiques visuelles, en particulier de façon incrémentale à partir de la translation et/ou de la rotation au moyen de laquelle les caractéristiques visuelles se transforment les unes dans les autres de la meilleure manière possible à partir d'images tridimensionnelles enregistrées à des instants différents.

15. Procédé selon la revendication 13 ou 14,
dans lequel en utilisant des propriétés connues du moyen de convoyage (12) on engendre un contour d'ensemble uniquement de l'objet (14) séparément du moyen de convoyage (12), en particulier en comparant une projection bidimensionnelle du contour d'ensemble avec des données de référence du moyen de convoyage.
